(19) Europäisches Patentamt
European Patent Office
Office européen des brevets

(11) **EP 3 115 553 A1**

(12) **EUROPEAN PATENT APPLICATION**

(43) Date of publication:
**11.01.2017 Bulletin 2017/02**

(51) Int Cl.:
*F01D 5/16* (2006.01)　　*F01D 5/26* (2006.01)
*F16F 15/00* (2006.01)　　*F16F 7/10* (2006.01)

(21) Application number: **15175532.9**

(22) Date of filing: **06.07.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **General Electric Technology GmbH 5400 Baden (CH)**

(72) Inventors:
• **Szwedowicz, Jaroslaw Leszek**
  **5330 Bad Zurzach (CH)**
• **Mueller, Wolfgang**
  **5412 Gebenstorf (CH)**

(74) Representative: **Bernotti, Andrea et al**
  **Studio Torta S.p.A.**
  **Via Viotti, 9**
  **10121 Torino (IT)**

(54) **MECHANICAL COMPONENT WITH THERMAL MEMORY DAMING DEVICE FOR THERMAL TURBO MACHINERY**

(57)　A mechanical component for thermal turbo machinery, especially a steam or gas turbine, comprises a base part (10) and at least one additional device (15) being mechanically coupled to said base part (10) in order to influence the vibration characteristic of said base part during operation of the turbo machine.

High-Cycle Fatigue at part-load can be reduced by enabling the mechanical coupling between said base part (10) and said at least one additional device, especially a bi-metallic (15a, 15b) or shape-memory-alloy device, to change with the temperature of said at least one additional device.

Temperature $T < T_T$

*Fig.7*

## Description

BACKGROUND OF THE INVENTION

The present invention relates to the technology of thermal turbo machines. It refers to a mechanical component for thermal turbo machinery according to the preamble of claim 1.

PRIOR ART

The increasing use of renewable energy sources to produce electricity requires additional operational flexibility from fossil-fuel steam and gas turbines. To compensate for renewable energy fluctuations in the electrical grid, a gas turbine (GT) engine needs to be more flexible, operating in peaking and partial loading modes as well as the base-load operation mode. At the constant rotational speed $\Omega$ of a turbine train, these flexible engine operation conditions induce variations of cooling-flow/metal temperature, mass-flow and pressure. These changes may generate unexpected asynchronous excitations acting upon the rotating and non-rotating mechanical components.

In general, the GT power depends directly on the mass flow, which varies under variable flexible operation conditions. The mass flow is the function of flow velocity U and its density $\rho$. The flow velocity U has a direct impact on Reynolds number Re = $(\rho\,U\,d\,)/\mu_f$, where $\mu_f$ denotes the free stream dynamic viscosity of a fluid and d means the characteristic diameter of the streamlined object or component, which is streamlined by said flowing medium.

Based on the experimental data given in the literature, the fluid flow excites the streamlined component within the range of Reynolds number varying between 30 and 5000. Then, regular vortex shedding as an oscillating flow takes place downstream the component, which is stimulated with the excitation function $f_e$. This excitation frequency is determined from the dimensionless Strouhal number St with St = (d $f_e$)/U. Acting perpendicularly to the oncoming flow direction upon the streamlined component, the excitation force F(t) is then determined from

$$F(t) = \frac{1}{2} c_w \rho U^2 A \sin(2\pi f_e t)$$

Where t is time, $c_w$ means dimensionless drag coefficient depending on the shape of a streamlined component as given in the handbooks, and A denotes the contour area of the streamlined object projected perpendicularly to the oncoming flow. In this equation, the term of $\rho U^2)/2$ corresponds to the dynamic pressure, which also alternates under different operation modes of a GT engine.

Thus, for varying operation conditions of a GT engine at the constant rotational speed $\Omega$, numerous asynchronous $f_e$ and synchronous $k\Omega$ (where k = 1, 2, 3, ..., $\infty$) resonances of the component can occur that might be unknown in the ordinary design process focusing mainly on a so-called "on-design point" of the engine.

Mechanical components of a gas turbine are usually designed for the base load nominal operation condition concerning ISO temperature varying between -15°C and 45°C. This is called "on-design mode operation". Under the flexible operation condition from the base load to part load of the GT engine, component base-load temperature $T_b$ reduces by even up to 120 K what generally depends on the type of a gas turbine. This temperature variation $\delta T$ changes material properties like Young's modulus, what has a direct impact on the variation of the natural frequencies of a GT component as expressed by

$$(1) \qquad \omega_{T_b \pm \delta T} = \sqrt{\frac{E_{T_b \pm \delta T}}{E_{T_b}}} \omega_{T_b}$$

Where $\omega_{Tb}$ denotes the reference eigenfrequency of the component at the base-load operation temperature $T_b$, $\omega_{Tb\pm\delta T}$ is the component eigenfrequency depending on part-load operation which subjects to 'changing temperature $\delta T$ with respect to the base-load temperature $T_b$, $E_{Tb}$ is Young's (elastic) modulus at temperature $T_b$ referring to the base load of a GT engine, and $E_{Tb\pm\delta T}$ is Young's modulus at temperature $T_b\pm\delta T$ referring to the part load of a GT engine.

In the past GTSC (Gas Turbine Single Cycle) and GTCC (Gas Turbine Combined Cycle) installed base have been designed mainly for the base load engine operation at component temperature $T_b$, called frequently on-design point. In general, there is a technical risk that the part-load GT operation can result in an unexpected resonance $\omega_{Tb\pm\delta T}$ of the GT component leading towards HCF (High-Cycle Fatigue) damages. For the operational flexibility conditions, both phenomena of component frequency variation and asynchronous excitations must be considered in the design process of new and installed base engines.

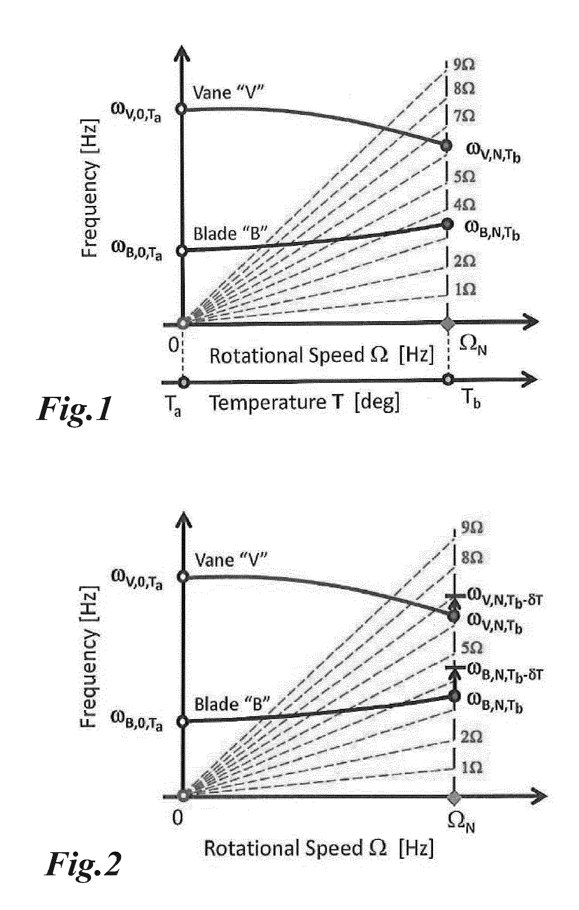

For over 100 years, the Campbell diagram has been used as best engineering practice preventing the components from their resonances (see Fig. 1 and e.g. document US 2009/0301055 A1). This diagram controls the frequency changes of rotating blade "B" and standstill vane "V" in terms of the rotational speed $\Omega$ of a turbine train.

In the Campbell Diagram of a rotating blade "B" and non-rotating vane "V" shown in Fig. 1, eigenfrequencies $\omega_{B,N,Tb}$ and $\omega_{V,N,Tb}$ depend on the stiffening effect of the centrifugal load growing from 0 to the nominal speed $\Omega_N$ and the softening effect of temperature increasing from the ambient temperature $T_a$ to base-load temperature $T_b$, where $k\Omega$ (where k = 1, 2, ..., $\infty$) denotes

the harmonic excitation due to non-uniform circumferential pressure distribution of a flow medium within the turbine.

Because of non-homogeneous pressure distribution of the fluid medium along the circumferential direction of a turbine housing, the blade $\omega_B$ and vane $\omega_V$ frequencies can be stimulated by harmonic excitations determined with $k\Omega$ (where k = 1, 2, ..., $\infty$) and illustrated with dashed lines in Fig. 1. Therefore, especially at the nominal rotational speed $\Omega_N$ (see vertical dashed line in Fig. 1), the vane and blade frequencies must differ from $k\Omega_N$. At the nominal rotational speed $k\Omega_N$, these blade $\omega_{B,N,Tb}$ and vane $\omega_{V,N,Tb}$ frequencies correspond to the base-load temperature $T_b$ and mass flow of the on-design operation condition.

However, the base-load temperature $T_b$ cannot be shown explicitly in the conventional Campbell diagram. Therefore, in case of the part load operation reducing the component temperature by $\delta T$, the resonance risk of the blades and vanes must be determined with Eq. (1) to show the shift of their frequencies along the vertical line of the nominal speed $\Omega_N$ (see Fig. 2). Since the blade $\omega_{S,N,Tb-\delta T}$ and vane $\omega_{V,N,Tb-\delta T}$ frequencies coincide with the harmonic excitations $k\Omega_N$, the bladed disc or vane assembly will experience HCF damages.

Concerning an approximate sense of Eq. (1), this adjustment of the conventional Campbell diagram to the part-load analysis of turbine blading seems to be not reliable enough. On the other hand, a new engineering procedure is required for determining safety regimes of part-load GT operation of the blades, vanes as well as other components in terms of temperature variation $T_b\pm\delta T$ at the nominal speed $\Omega_N$ of a turbine train.

For the part-load operation condition, which generally corresponds to the engine power reduction, temperature and mass flow become crucial engineering parameters in assessment of HCF risk. The conventional Campbell diagram shown in Fig. 2 does not provide enough technical details in the design process, because the metal temperature variation $\delta T$ of a rotating blade or stationary vane is not shown explicitly.

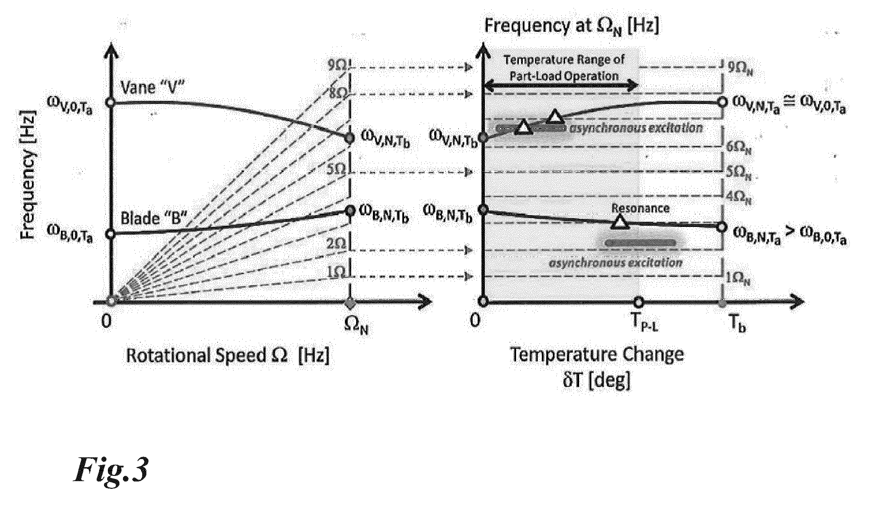

Therefore, a Part-Load Resonance Diagram triggered by temperature variation $\delta T$ is proposed as illustrated in Fig. 3 (right-hand side picture). The Part-Load Resonance Diagram of Fig. 3 shows for a rotating blade "B" and stationary vane "V" the eigenfrequency change $\omega(\delta T)_{B,N}$ and $\omega(\delta T)_{V,N}$ with respect to temperature reduction $\delta T$ from base-load temperature $T_b$ under the part-load GT operation condition at the nominal rotational speed $\Omega_N$ of a turbine train, where a darker zone corresponds to the allowable temperature range of interest regarding needs of minimal $T_{TAT}$ for GTCC operation.

Indeed, this diagram extends the conventional Campbell's diagram information in detail and measures the eigenfrequencies variation of components in terms of temperature variation $\delta T$ of base-load temperature $T_b$ at the constant rotational speed $\Omega_N$ of a turbine train what corresponds to the part-load operation condition.

In the Part-Load Resonance Diagram, usually a particular range of temperature variation is of interest (see the darker zone in Fig. 3), which assures enough high $T_{TAT}$ for a stable steam turbine operation in Combined Cycle plants. This diagram allows for risk check of asynchronous excitation triggered by reducing mass flow of fluid medium. Those asynchronous excitation frequencies can be either computed with time-marching CFD approach or measured in the engine. For practical engineering judgment, the well-known closed forms based on Karman vortex street and the Strouhal number St can be used for assessing these asynchronous excitations in Fig. 3.

Thus, eigenfrequency curves $\omega(\delta T)$ of each GT component must avoid coincident points with horizontal excitation lines representing harmonic and asynchronous excitation at the nominal rotational speed. A typical wobbling effect of $\pm5\%$ of the nominal rotational speed $\Omega_N$ does not have a significant impact on the change of the eigenfrequencies of rotating blades, and this phenomenon can be neglected in the analysis without reducing the reliability. In case of significant change of the rotational speed $\Omega$, then an additional Part-Load Resonance Diagram must be created at this speed of interest as demonstrated for $\Omega_N$ in Fig. 3. For the stationary components, the rotational speed has no impact on the analysis.

In prior art, several proposals have been made to manipulate the vibration behavior of components in thermal turbo machinery.

Document US 6,290,037 B1 discloses a vibration absorber in which an absorber end mass is coupled to a primary mass by means of a cantilevered beam, wherein at least a portion of the beam comprises a shape memory alloy (SMA). Preferably, the end mass is coupled to the primary mass with several discrete SMA wires which may be individually heated. When each of the SMA wires is heated above a predetermined temperature, the SMA material undergoes a phase change which results in a change in the stiffness of the SMA wire. Heating of the various wires in various combinations allows the operational frequency of the absorber to be actively tuned. The frequency of the absorber may therefore be tuned to closely match the current vibration frequency of the primary mass, thereby allowing the absorber to be adaptively tuned to the frequency of the primary mass in a simple and straightforward manner.

Document US 6,796,408 B2 discloses a method for damping vibrations in a turbine. The method includes performing structural dynamics analysis on the turbine to determine at least one area of high vibration stress on the turbine, and performing thermal analysis of the turbine to determine at least an approximated maximum operating temperature at the area of high vibration stress. Additionally, the method includes utilizing hysteresis damping to dampen operational vibrations. The hysteresis damping includes selecting a shape memory alloy (SMA) having a martensitic-to-austenite transformation temperature substantially similar to the approximate maximum operating temperature of the component at the area of high vibration stress, and disposing the selected SMA on the turbine on the related area of high vibratory stress.

Document US 7,300,256 B1 discloses a damping arrangement for a blade of an axial turbine, in particular a gas turbine, which includes a damping element which is arranged in a recess in the blade aerofoil of the blade and frictionally dampens the vibrations of the blade. In such a damping arrangement, simplified manufacture and assembly and a reliable and effective function are achieved by the recess being configured as a cavity extending in the radial direction through the inside of the blade aerofoil, the damping element being inserted in the radial direction into said cavity.

In document DE 10 2010 003 594 A1, turbine blades have a vibration damping element formed with a shape memory alloy (SMA) element. The damping element is coupled with a surrounding area such that heat transferred to the SMA element from hot fluid flowing around one blade is changed based on a vibration state of the blade. The SMA element is formed with a SMA wire. The SMA element is extended in end surfaces of covers or a supporting wing. The SMA element couples the blade with the surrounding area in transverse to a longitudinal axis of the blade.

Document US 2012/0183718 A1 discloses a part, which includes a structure and at least one shape memory alloy element that is pre-stressed and embedded at least in part within said structure. The shape memory alloy is suitable for dissipating the mechanical energy of said structure when it vibrates in a given frequency band.

However, the situation at part-load is neither discussed nor solved in any of these prior art references.

SUMMARY OF THE INVENTION

It is an object of the present invention to provide a mechanical component for thermal turbo machinery with enhanced protection against High-Cycle Fatigue (HCF), which takes into account the influences at part load operation.

This object is obtained by a mechanical component according to Claim 1.

According to the invention, a mechanical component for thermal turbo machinery, especially a steam or gas turbine, comprises a part, especially base part, and at least one additional device being mechanically coupled to said part in order to influence the vibration characteristic of said part during operation of the turbo machine

It is characterized in that the mechanical coupling between said part and said at least one additional device changes with the temperature of said at least one additional device.

According to an embodiment of the invention said at least one additional device is a device, which changes with temperature its form and position relative to said part in order to establish an additional mechanical contact between said part and said at least one additional device within a predetermined temperature range.

Specifically, said at least one additional device is a bi-metallic device.

Alternatively, said at least one additional device is a shape-memory-alloy device.

According to another embodiment of the invention said additional mechanical contact is a stiffening contact, which mechanically stiffens said part.

Alternatively or additionally, said additional mechanical contact is a friction contact, which dampens vibrations in said part.

According to a further embodiment of the invention said at least one additional device has the form of a longitudinal beam or curved plate, which is fixedly connected at both ends to said part, such that it establishes said additional mechanical contact in an area between both ends, when it changes with temperature its form and position relative to said part.

According to just another embodiment of the invention said at least one additional device has the form of a longitudinal cantilever or curved plate, which is fixedly connected at one end to said part, such that it establishes said additional mechanical contact with its other, free end, when it changes with temperature its form and position relative to said part.

According to a further embodiment of the invention additional sub-parts are provided on said at least one additional device in an area of said additional mechanical contact in order to influence the character of said additional mechanical contact.

According to another embodiment of the invention a heating or cooling means is provided for actively changing the temperature of said at least one additional device.

Specifically, said part is a blade or vane of a gas turbine.

Specifically, said part is an exhaust gas housing of a gas turbine.

It can as well be part of a combustor, compressor, or any other system whose operation temperature varies enough for changing remarkably Young's Modulus E as given in Eq. (1).

BRIEF DESCRIPTION OF THE DRAWINGS

The present invention is now to be explained more closely by means of different embodiments and with reference to the attached drawings.

Fig. 1    shows a Campbell Diagram of a rotating blade "B" and non-rotating vane "V", whose eigenfrequencies $\omega_{B,N,Tb}$ and $\omega_{V,N,Tb}$ depend on the stiffening effect of the centrifugal load growing from 0 to the nominal speed $\Omega_N$ and

softening effect of temperature increasing from the ambient temperature $T_a$ to base-load temperature $T_b$, where $k\Omega$ (where k = 1, 2, ..., $\infty$) denotes the harmonic excitation due to non-uniform circumferential pressure distribution of a flow medium within the turbine;

Fig. 2      shows a Conventional Campbell Diagram of a rotating blade "B" and stationary vane "V" concerning their eigenfrequency increase to values $\omega_{S,N,Tb-\delta T}$ and $\omega_{V,N,Tb-\delta T}$ due to temperature reduction $\delta T$ under the part-load GT operation condition at the unchanged nominal rotational speed $\Omega_N$ of a turbine train;

Fig. 3      shows a part-load Resonance Diagram (right-hand side picture) for a rotating blade "B" and stationary vane "V" recording eigenfrequency change $\omega(\delta T)_{B,N}$ and $\omega(\delta T)_{V,N}$ with respect temperature reduction $\delta T$ from base-load temperature $T_b$ under the part-load GT operation condition at the nominal rotational speed $\Omega_N$ of a turbine train, where a darker zone corresponds to the allowable temperature range of interest regarding needs of minimal $T_{TAT}$ (turbine outlet temperature) for GTCC operation;

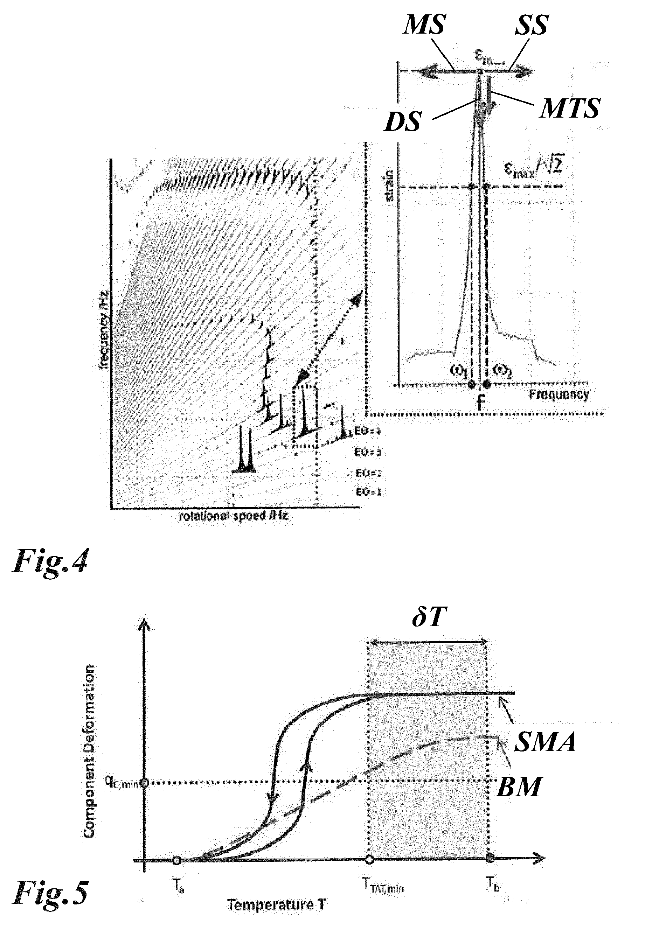

Fig. 4      illustrates four design strategies of a rotating shrouded turbine blade (as an arbitrary example) against HCF, namely (1) Mass Strategy (MS): Component Mass Variation, (2) Stiffness-Strategy (SS): Component Stiffness Increase, (3) Damping-Strategy (DS): Component Damping Enlargement, and (4) Mistuning-Strategy (MTS): Component mistuned in terms of Excitation;

Fig. 5      shows typical deformation curves of systems having a bi-metallic configuration (dashed curve) or made of a shape memory alloy (solid lines) with respect to temperature T, where $T_a$, $T_{TAT-min}$, $T_b$ denote the ambient, minimal Turbine Outlet Temperature for GTCC operation, and base-load temperature of a GT engine, respectively, and $q_{C,min}$ denotes the threshold deformation of the system for a contact with the GT component of interest above temperature $T_{TAT-min}$;

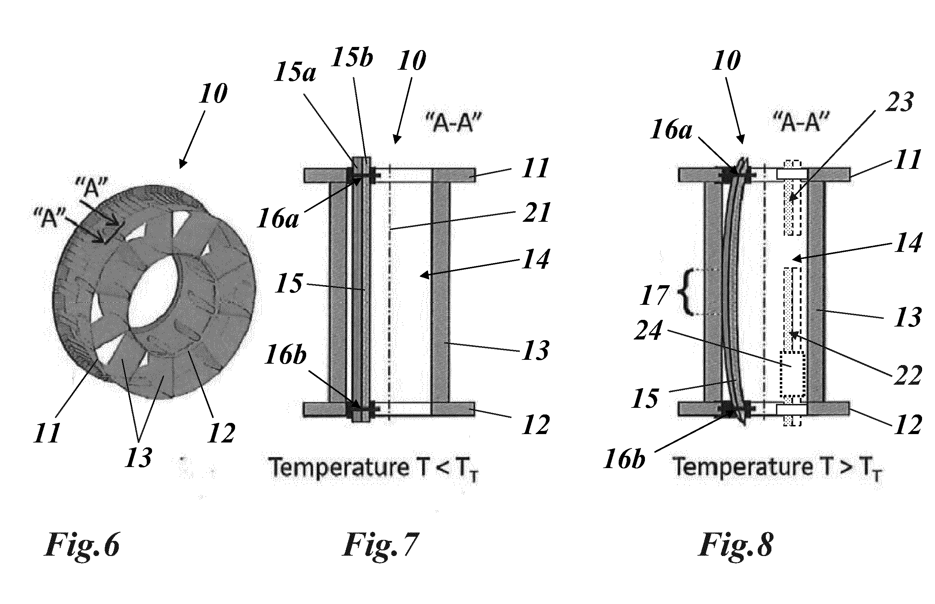

Fig. 6-8      show an embodiment of the invention by applying a bimetallic TMD to the stationary Exhaust Gas Housing of a GT for achieving a stiffening effect to shift the original system's eigenfrequency by $\delta\omega$ due to the additional bending stiffness of the bi-metallic system, where $T_T$ means the threshold temperature of interest;

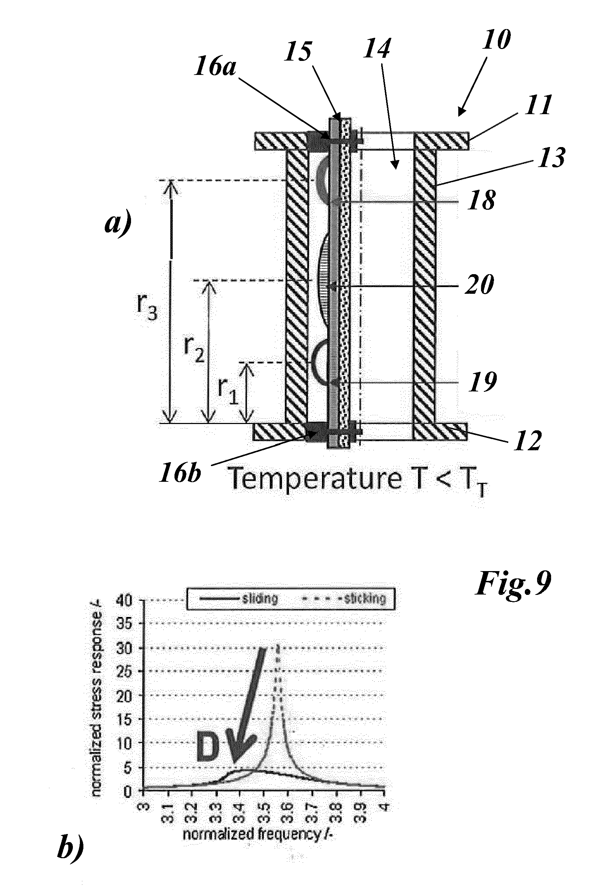

Fig. 9      shows TMD configuration for multi-contacts amplifying stiffening effect and/or frictional damping performance with respect to the mode shapes of the baseline part, with Fig. 9(a) showing examples of a thin-wall, thick-wall and solid sub-parts for generating different contact characteristics, and with Fig. 9(b) illustrating the results of the sub-parts arranged for stiffening and damping effects in the resonance response function;

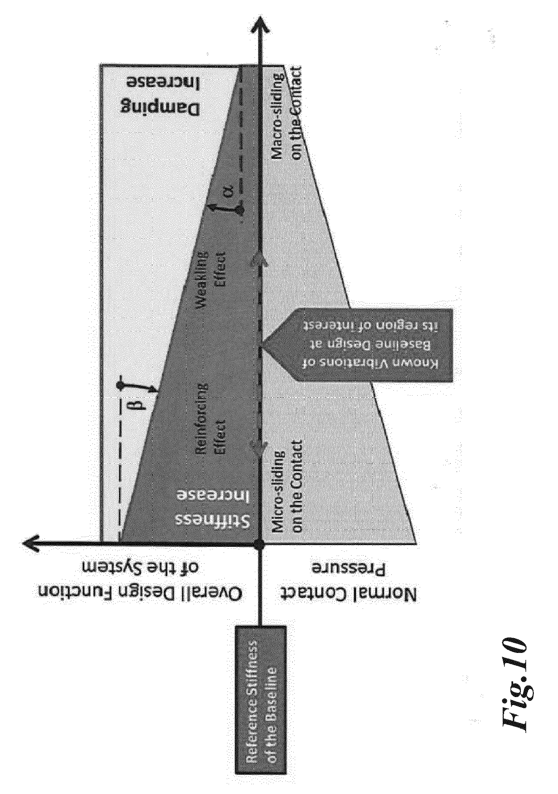

Fig. 10      illustrates re-design degrees of freedom with TMD in mechanical contact with the base part, where "$\alpha$" and "$\beta$" correspond to the stiffening or damping concept with one sub-part (see Fig. 9) depending on vibration magnitudes of the base part; and

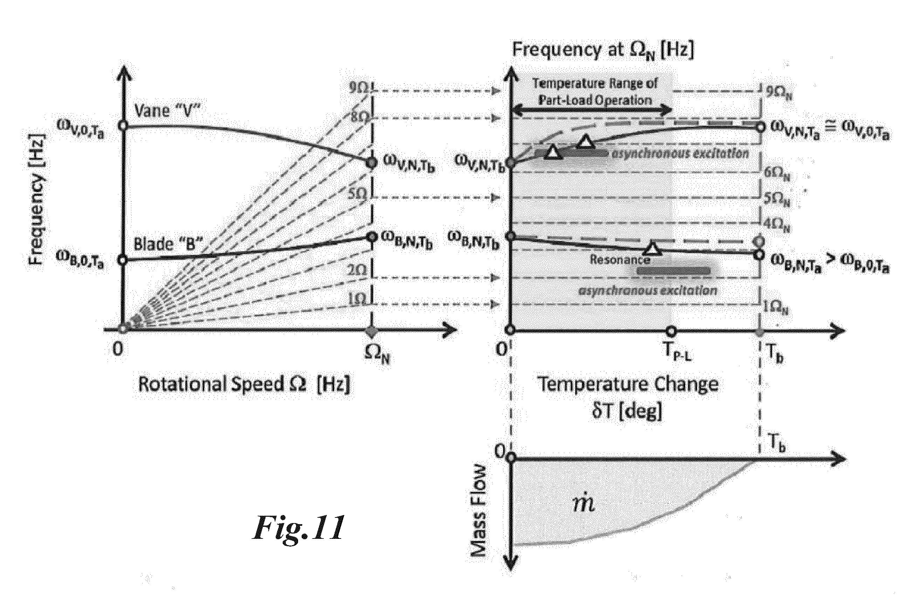

Fig.11      shows a part-load Resonance Diagram for a rotating blade "B" and stationary vane "V" equipped with the proposed TMD, which shifts the original eigenfrequency $\omega(\delta T)_{B,N}$ and $\omega(\delta T)_{V,N}$ by required values $\delta\omega_B(\delta T)$ and $\delta\omega_V(\delta T)$ (as illustrated with two long-dashed curves) to avoid the resonances that appear within the operation zone of the part-load condition, or which increases the damping performance of the overall system in terms of varying mass flow $\dot{m}$, which can generate asynchronous excitations of the baseline component.

## DETAILED DESCRIPTION OF DIFFERENT EMBODIMENTS OF THE INVENTION

An overall idea of the present invention is to introduce an additional device into a new or existing design of a baseline component or part of a thermal turbo machine, especially a gas or steam turbine, which by mechanical coupling with the component passively changes the mechanical properties of the baseline component in terms of variation of the operation temperature of the engine.

This additional device, from now on called Thermal Memory Device (TMD), increases the reference stiffness of the baseline component and also enlarges the frictional damping onto mechanical contacts between the baseline component and the additional device. These additionally created mechanical properties of the baseline component with a TMD protect the engine from High-Cycle Fatigue under high temperature operations like in gas turbines. Through the created mechanical contacts onto the baseline component, the TMD does not cause any thermal stress during rapid variation of the thermal boundary conditions because the baseline component and additional device can slide relatively to each other without generating any thermal stress concentration during their thermal expansions. The aerodynamic performance of the engine is not impacted by applying the TMD inside the baseline component like for instance a cooled turbine blade or vane.

At the on-design point, each component of a GTCC system must be free of resonance in accordance with Campbell diagram (see Figs. 1 and 2). The part load conditions of e.g. a GT engine generate two effects of (1) Metal Temperature Reduction of components, and/or (2) Generation of unexpected asynchronous excitations that are usually known from the test engine or field experiences.

In case of the unexpected resonance under the part-load operation, there are 4 standard resonance-mitigation strategies, such as Mass-Strategy (MS), Stiffness-Strategy (SS), Damping-Strategy (DS), and Mistuning-Strategy (MTS), as illustrated in Fig. 4.

According to the Mass-Strategy (MS), the mass of vibrating areas of the large component, e.g. an Exhaust Gas Housing, is locally changed. This is not an effective solution because frequency shifts of 2-3 Hz require a significant modification of the geometry of the large baseline component.

The Damping-Strategy (DS) is based on the friction or impact dissipation mechanism and does not relate to a straightforward engineering solution. Also, the Mistuning-Strategy (MTS) is an out-of-the-box solution of the engineering practice, which usually corresponds with too high costs for its validation.

Therefore, the Stiffness-Strategy (SS), which increases the overall stiffness of the component, is applied as the most simple and efficient mitigation. Often, an additional coupling like e.g. a bolt or stab is welded between the components or component parts, which increases the system's frequency of interest. However, this stiffening solution placed in the flow channel of a turbine generates aerodynamic losses or can easily lead toward new TMF (Thermal-Mechanical Fatigue) damages. For the components operating above evaluated temperature, an additional stiffness caused by the bolt does not allow for the thermal expansion of the overall system and TMF cracks can appear on the zones of thermal stresses driven by variable part-load operation conditions.

In GT technology, the thermally loaded components are usually designed for internal cooling and comprise thin-shell structures to avoid too high thermal stress concentrations during fast start-ups or shut-downs of an engine. In other words, a typical GT vane comprises a hollow space for internal cooling, which can be used for introducing an additional structural element which stiffens the baseline component for shifting its eigenfrequency above the resonance of interest.

To control this stiffening process in terms of temperature, the internal (additional) component or element is made of bimetallic material (BM) or shape memory alloy (SMA) whose characteristics are shown in Fig. 5. Deformations of the bi-metallic system (BM) are a substantially linear function in terms of temperature T. The shape memory alloy (SMA) demonstrates "binary" behavior of the deformation with the typical pseudo elastic-plastic hysteresis, as illustrated in Fig. 5.

Figs. 6-8 show an example of how a standard baseline component can be equipped with an internal system made of conventional bi-metallic system, according to an embodiment of the present invention. Baseline component in this case is a stationary exhaust gas housing 10 of a gas turbine (see for example document US 8,915,707 B2). The exhaust gas housing 10 comprises two concentric rings, namely an outer ring 11 and an inner ring 12. Both rings 11 and 12 are connected by a plurality of radial struts 13. Each strut 13 has a wing-like aerodynamic cross-sectional profile and a hollow interior 14 (Figs. 7, 8).

As can be seen in Figs. 7, 8, which show a cross-section in the plane A-A, a bi-metallic thermal memory device (TMD) 15 is arranged within a strut parallel to the longitudinal axis 21 of said strut. Thermal memory device 15 is positioned near the wall of strut 13, extends through hollow interior 14 of strut 13, and is rigidly fixed at both ends to the outer ring 11 and inner ring 12 by means of suitable fixations 16a and 16b. Thermal memory device 15 itself is divided in longitudinal direction into two bounded metal parts or beams 15a and 15b, which consist of metals with different thermal behavior to establish the necessary bi-metallic effect.

For temperatures below a threshold value $T_T$, there is no mechanical contact between the inner surface of the baseline component 10 and the external surface of the bi-metallic system 15, as illustrated in Fig. 7. Above the threshold temperature $T_T$ of interest, the bi-metallic component 15 comes in contact with the baseline part 10 (contact area 17 in Fig. 8), what increases the overall eigenfrequency of the coupled internally system 11, 12, 13, 15 by the required frequency range $\delta\omega$. The frequency shift $\delta\omega$ can be enforced by applying additional components with thermal memory made of bi-metallic or shape memory materials. Also, instead of one simple beam 15 clamped at its both ends, two cantilevers 22, 23 (Fig. 8) with one free end each can be used for getting two contacts with the baseline part 10.

Cantilever beams 22, 23 of different lengths could be considered for arranging contacts at different locations with respect to vibration nodes and antinodes of mode shapes of the baseline part 10 (see Fig. 8).

Furthermore, as shown in Fig. 9(a), the external surface of the thermal memory device 15 can be equipped with additional sub-parts 18, 19, 20, whose shapes better match with the internal contour of the baseline part (in the example strut 13). Additionally, these shapes can be arranged for creating the best friction damping performance during vibrations of the entire system. In particular, sub-part 18 is a hollow thick-wall part, sub-part 19 is a hollow thin-wall part, and sub-part 20 is a fully solid part. These different sub-parts 18, 19 and 20 each generate a different contact normal and tangential stiffness.

Thus, the thermal memory device TMD being in contact with the baseline part has two functions:

> 1) Stiffening effect for shifting the eigenfrequency of interest, and
> 2) Damping of the forced vibration through the frictional dissipation onto the contact.

Accordingly, two S-Stiffness and D-Damping Design Strategies SS and DS are thus realized in the structure of Fig. 9(a), as illustrated in Fig. 9(b). As explained above, each sub-part can be designed as a thin-wall, thick-wall or/and solid structure for reaching the damping performance on the contacts at different radii r1, r2 and r3 in accordance with an elastic-friction dissipation mechanism or other approaches known in the open literature. Because the thermal memory device 15 always presses sub-parts 18, 19 and 20 against the baseline part 13, contact wear would not have an impact on the damping performance and the entire free-failure operation. Anyway, the wear at said contacts can be minimized with a specific coating.

For the stationary baseline components, even of large dimensions like an EGH (Exhaust Gas Housing), the stiffening effect or/and the damping performance could be validated in a typical annealing oven by using a standard system for measuring vibrations in evaluated temperatures.

Depending on needs of the design protection, either stiffening or damping performance of the system can be enforced as schematically illustrated in Fig. 10. The vibrations of the baseline component, known from the measurements or/and computations, are considered as the kick-off point of the re-design.

At the region of interest of the baseline component, the thermal memory device TMD comes in the required technical (flat) or Hertz contact within the baseline component. In terms of the cross-section of the device, the overall baseline component stiffness can be increased or reduced after being in contact at the operation temperature of interest. Then, the overall stiffness of the entire system increases by ratio "$\alpha$" from the reference stiffness of the baseline as illustrated with a dark region ("stiffness increase") in Fig. 10.

With respect to magnitudes of the relative contact vibration of the baseline component, the damping performance can grow or reduce. These damping performances can be also influenced in the re-design by applying of the particular contact form, contact stress magnitude or contact area as well as with specific coating increasing or decreasing friction coefficient. The designer has an option of adding additional contact areas as explained schematically with solid or hollow sub-parts in Fig. 9(a). Then, in terms of the vibration of the baseline component, the damping performance of the overall system in contact can be controlled with rate "$\beta$" by using one or more hollow and solid sub-parts (bright upper region "damping increase" in Fig. 10).

The final outcomes of the rotating blade or stationary vane equipped by the component with thermal memory are illustrated with long-dashed curves in Fig. 11 (upper right part of the Figure). The original eigenfrequencies of the blade $\omega(\delta T)_{B,N}$ and the vane $\omega(\delta T)_{V,N}$ are shifted by the required values $\delta\omega_B(\delta T)$ and $\delta\omega_V(\delta T)$ to avoid the resonances that appear within the operation zone of the part-load condition (see the two long-dashed curves in Fig. 11). By using the component with thermal memory as explained above in connection with Figs. 6-9, there are options for softening the effect such that for instance the new eigenfrequencies of the part are lower than the original ones. This mechanism is within the scope of the present invention, too.

The technology of the adding and mounting a thermal memory device (TMD) for part-load operation, as described above, can be applied to rotating components or stationary parts of different dimensions. Thus, a complete exhaust gas housing as shown in Fig. 6 or single blades or vanes can be equipped with a suitable TMD. The proposed bi-metallic systems (15 or 22, 23 in Fig. 8) may be made of arbitrary metals that are available on market or can be developed according to particular design reasons. Also, arbitrary shape memory alloys (SMAs) may be made of known elements or may be developed for achieving the desired purpose of the design. In other words, all known or newly developed bi-metallic or/and shape memory alloys of various shapes and fixations are part of the present invention. This applies also to arbitrary forms of the TMDs. Additionally, sub-parts of the TMD device (as shown for example in Fig. 9) for frictional damping can be made of different materials or are designed as brushes or others for arranging soft- or hard-contact stiffness.

Several TMDs can be arranged in series or parallel connection for weakening or enforcing overall stiffness and/or damping results of the entire system. Also, the bi-metallic and shape memory alloy can be combined together for defining bi-linear stiffness effect as the result of the linear and binary deformation, respectively. In addition, to vary the stiffness result continually or temporarily, local or overall cooling or heating effects of this system can be considered that can be arranged through different sources like electrical heaters (24 in Fig. 8), and others.

In general, the thermal memory device TMD can be also designed within the meaning of increasing stiffness of the baseline component, whose original frequency begins to get larger above the threshold temperature of interest. For this general design purpose, the generated mechanical contact between the device and baseline component does not generate any thermal stress concentration which appears in every conventional joining techniques of welding, brazing, mechanical joining and others in the operation of thermal engines. This type of the application corresponds mainly to the design concept based on Stiffness-Strategy (SS) as illustrated in Fig. 4 and can be used for arbitrary operation condition of a thermal engine. In other words, this invention is not only limited to flexible operation of the engine.

The present invention is descried with respect to needs of GTSC and GTCC systems. Indeed, the scope of this innovation can be applied to other engines and machines that are designed for the on-design point but need to operate additional under various part-load operation conditions. The TMD can be triggered by thermal and mechanical loading change or can be driven with an active-control system (e.g. a heater 24, as shown in Fig. 8). The invention can be used for engines operating with constant and variable rotational speeds.

LIST OF REFERENCE NUMERALS

| 10 | exhaust gas housing (stationary) |
|----|----------------------------------|
| 11 | outer ring |
| 12 | inner ring |
| 13 | strut |
| 14 | hollow interior |
| 15 | thermal memory device (TMD) |
| 15a,b | metal part |
| 16a,b | fixation |
| 17 | contact area |
| 18,19,20 | sub-part |
| 21 | longitudinal axis (strut) |
| 22,23 | cantilever |
| 24 | heater (e.g. electrical) |

**Claims**

1. Mechanical component for thermal turbo machinery, especially a steam or gas turbine, comprising a part, especially base part, (10) and at least one additional device (15, 22, 23) being mechanically coupled to said part (10) in order to influence the vibration characteristic of said part (10) during operation of the turbo machine, **characterized in that** the mechanical coupling between said part (10) and said at least one additional device (15, 22, 23) changes with the temperature of said at least one additional device (15, 22, 23).

2. Component as claimed in Claim 1, **characterized in that** said at least one additional device (15, 22, 23) is a device, which changes with temperature its form and position relative to said base part (10) in order to establish an additional mechanical contact between said part (10) and said at least one additional device (15, 22, 23) within a predetermined temperature range.

3. Component as claimed in Claim 2, **characterized in that** said at least one additional device (15, 22, 23) is a bi-metallic device.

4. Component as claimed in Claim 2, **characterized in that** said at least one additional device is a shape-memory-alloy device.

5. Component as claimed in one of the Claims 2 to 4, **characterized in that** said additional mechanical contact is a stiffening contact, which mechanically stiffens said part (10).

6. Component as claimed in one of the Claims 2 to 4, **characterized in that** said additional mechanical contact is a friction contact, which dampens vibrations in said part (10).

7. Component as claimed in Claim 2, **characterized in that** said at least one additional device (15) has the form of a longitudinal beam or curved plate, which is fixedly connected at both ends to said part (10), such that it establishes said additional mechanical contact in an area (17) between both ends, when it changes with temperature its form and position relative to said part (10).

8. Component as claimed in Claim 2, **characterized in that** said at least one additional device (22, 23) has the form of a longitudinal cantilever or curved plate, which is fixedly connected at one end to said part (10), such that it establishes said additional mechanical contact with its other, free end, when it changes with temperature its form and position relative to said part (10).

9. Component as claimed in Claim 2, **characterized in that** additional sub-parts (18, 19, 20) are provided on said at least one additional device (15) in an area of said additional mechanical contact in order to influence the character of said additional mechanical contact.

10. Component as claimed in Claim 2, **characterized in that** a heating or cooling means (24) is provided for actively changing the temperature of said at least one additional device (22).

11. Component as claimed in Claim 1, **characterized in that** said part is a blade or vane of a gas turbine.

12. Component as claimed in Claim 1, **characterized in that** said part is an exhaust gas housing (10) of a gas turbine.

**Fig.1**

**Fig.2**

*Fig.3*

**Fig.4**

**Fig.5**

*Fig.8*

*Fig.7*

*Fig.6*

*a)*

Temperature T < T$_T$

*b)*

*Fig.9*

*Fig.10*

Fig.11

Europäisches
Patentamt

European
Patent Office

Office européen
des brevets

# EUROPEAN SEARCH REPORT

Application Number

EP 15 17 5532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 267 662 B2 (PATRICK D KEITH [US] ET AL) 18 September 2012 (2012-09-18) | 1-3,5,6, 8,11 | INV. F01D5/16 |
| Y | * column 5, line 35 - column 7, line 6; figures 1-3 * | 9 | F01D5/26 F16F15/00 F16F7/10 |
| X | US 4 917 172 A (FALDUTI CLAUDE [FR]) 17 April 1990 (1990-04-17) * column 6 - column 10; figures 4,5 * | 1,2,4-7 | |
| X | US 8 210 799 B1 (RAWLINGS CHRISTOPHER K [US]) 3 July 2012 (2012-07-03) * figures 2,3 * | 1-3,5-7, 11,12 | |
| X,D | US 7 300 256 B2 (MASSEREY PIERRE-ALAIN [CH] ET AL) 27 November 2007 (2007-11-27) * column 3, line 57 - column 4, line 67; figures 1-3 * | 1,2,5-7, 11,12 | |
| X,D | DE 10 2010 003594 A1 (DEUTSCH ZENTR LUFT & RAUMFAHRT [DE]) 6 October 2011 (2011-10-06) * paragraphs [0007] - [0009], [0012] - [0018], [0021] - [0023], [0056] - [0060]; figures 1-17 * | 1-9,11, 12 | |
| X,D | US 6 796 408 B2 (SHERWIN YANG [US] ET AL) 28 September 2004 (2004-09-28) * column 6; figure 3 * | 1,2,4-7, 11,12 | TECHNICAL FIELDS SEARCHED (IPC) F01D F04D F16F |
| X,D | US 2012/183718 A1 (FABRE ADRIEN [FR] ET AL) 19 July 2012 (2012-07-19) * paragraphs [0002], [0009], [0010], [0039], [0047] - [0052], [0060] - [0068]; figures 1-6 * | 1,2,4,6, 9,11,12 | |
| Y,D | US 6 290 037 B1 (WILLIAMS KEITH A [US] ET AL) 18 September 2001 (2001-09-18) * the whole document * | 1,2,4-12 | |

-/--

The present search report has been drawn up for all claims

| Place of search | Date of completion of the search | Examiner |
|---|---|---|
| Munich | 11 January 2016 | Koch, Rafael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 15 17 5532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 553 716 C (AEG)<br>29 June 1932 (1932-06-29)<br>* page 2; figures 1,2 *<br>----- | 1,2,4-12 | |

TECHNICAL FIELDS
SEARCHED        (IPC)

The present search report has been drawn up for all claims

| Place of search | Date of completion of the search | Examiner |
|---|---|---|
| Munich | 11 January 2016 | Koch, Rafael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 17 5532

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2016

| Patent document cited in search report | | Publication date | Patent family member(s) | | Publication date |
|---|---|---|---|---|---|
| US 8267662 | B2 | 18-09-2012 | CA | 2645380 A1 | 13-06-2009 |
| | | | EP | 2071128 A2 | 17-06-2009 |
| | | | JP | 5419433 B2 | 19-02-2014 |
| | | | JP | 2009144717 A | 02-07-2009 |
| | | | US | 2010008778 A1 | 14-01-2010 |
| US 4917172 | A | 17-04-1990 | DE | 3867116 D1 | 06-02-1992 |
| | | | EP | 0288361 A1 | 26-10-1988 |
| | | | ES | 2029045 T3 | 16-07-1992 |
| | | | FR | 2614378 A1 | 28-10-1988 |
| | | | JP | H01111101 A | 27-04-1989 |
| | | | US | 4917172 A | 17-04-1990 |
| US 8210799 | B1 | 03-07-2012 | NONE | | |
| US 7300256 | B2 | 27-11-2007 | DE | 10356237 A1 | 30-06-2005 |
| | | | EP | 1538304 A2 | 08-06-2005 |
| | | | JP | 4523391 B2 | 11-08-2010 |
| | | | JP | 2005163789 A | 23-06-2005 |
| | | | US | 2007253828 A1 | 01-11-2007 |
| DE 102010003594 | A1 | 06-10-2011 | NONE | | |
| US 6796408 | B2 | 28-09-2004 | NONE | | |
| US 2012183718 | A1 | 19-07-2012 | FR | 2950382 A1 | 25-03-2011 |
| | | | US | 2012183718 A1 | 19-07-2012 |
| | | | US | 2015144256 A1 | 28-05-2015 |
| | | | WO | 2011033206 A1 | 24-03-2011 |
| US 6290037 | B1 | 18-09-2001 | NONE | | |
| DE 553716 | C | 29-06-1932 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090301055 A1
- US 6290037 B1
- US 6796408 B2
- US 7300256 B1
- DE 102010003594 A1
- US 20120183718 A1
- US 8915707 B2